# FASCICULE DE BREVET EUROPEEN

(11) **EP 2 571 382 B1**
(45) Date de publication et mention de la délivrance du brevet: **16.11.2016**
(21) Numéro de dépôt: 11727219.5
(22) Date de dépôt: 17.05.2011
(51) Int. Cl.: B65B 25/04, B65D 81/32, A23L 35/00, A23L 23/00, A23L 5/10, B65D 51/28

(54) **NOUVEAU PRODUIT ALIMENTAIRE**
NEUARTIGES LEBENSMITTELPRODUKT
NOVEL FOOD PRODUCT

(30) Priorité: 21.05.2010 FR 1053957
(43) Date de publication de la demande: 27.03.2013
(73) Titulaire: Sebban, Claude, Netanya (IL)
(72) Inventeur: Sebban, Claude, Netanya (IL)
(74) Mandataire: Le Cacheux, Samuel L.R.
(86) Numéro de dépôt international: PCT/FR2011/051102
(87) Numéro de publication internationale: WO 2011/144859

(56) Documents cités:
- WO-A1-98/33399
- FR-A1- 2 929 491
- JP-A- 4 367 476
- US-A- 5 718 933

## Description

La présente invention est relative aux domaines des plats cuisinés, et en particulier des préparations à base de pâtes alimentaires en sauce.

Un des inventeurs de la présente demande de brevet a déjà décrit dans des demandes de brevet antérieures des produits alimentaires conditionnés, à base de pâtes. On pourra notamment se référer aux demandes de brevet FR 2 846 196, FR 2 860 213 et WO 2007/003864. De tels produits comportent des pâtes enrobées de sauce conditionnées dans un emballage adapté pour une cuisson ultime ou un réchauffement aux micro-ondes. De tels produits sont parfaitement adaptés pour une présentation en frais ou en congelés et présentent le plus souvent une D.L.C. d'une quinzaine de jours. En frais, au-delà de 15 jours, les pâtes gonflent et se ramollissent compte tenu de la présence de sauce.

Les inventeurs, soucieux d'augmenter la D.L.C. de leurs produits, se voient confrontés au besoin de disposer d'un emballage dans lequel les pâtes et la sauce sont séparés, tout en étant d'utilisation aisée pour le consommateur. De plus, dans certains cas, il peut être avantageux de pouvoir pasteuriser ou stériliser les produits alimentaires, et ce, de préférence, directement dans l'emballage dans lequel ils sont proposés. Or, la pasteurisation est, le plus souvent, réalisée à chaud, bien que de nouveaux procédés de pasteurisation à froid par irradiation soient actuellement développés. Mais, dans les solutions antérieures où les pâtes et la sauce sont mélangées, du fait de la présence de sauce en contact avec les pâtes, une telle pasteurisation ou stérilisation ne peut pas être réalisée pour obtenir des résultats satisfaisants sur le plan organoleptique pendant la période de conservation. Il est donc, également, nécessaire de proposer un conditionnement dans lequel la sauce et les aliments sont dans des contenants séparés.

Certaines solutions ont déjà été développées, elles se présentent sous la forme, notamment, de deux barquettes rectangulaires séparées mais juxtaposées horizontalement et attachées entre elles : une pour les pâtes et l'autre pour la sauce. Lors de la consommation, ces solutions ne sont pas satisfaisantes pour le consommateur. L'utilisateur doit faire chauffer les deux barquettes ensemble dans un four à micro-ondes. Ensuite, il doit détacher les barquettes, enlever l'opercule de chacune des deux barquettes, prendre la barquette de sauce qui est très chaude, et donc en faisant attention de ne pas se brûler, puis verser la sauce sur les pâtes. Les pâtes peuvent rester dans leur barquette ou être elles-mêmes déposées dans une assiette. Des solutions similaires existent avec des barquettes à plusieurs compartiments.

I a donc été proposé dans la demande de brevet WO 2009/136038 un nouveau produit alimentaire dans lequel les aliments sont disposés dans un premier contenant et la sauce dans un deuxième, avec le deuxième contenant qui est logé au dessus des aliments, et qui présente des moyens de fermeture orientés vers les aliments dont l'ouverture n'est pas activée dans les conditions de pasteurisation ou de stérilisation de la préparation alimentaire et est activable par chauffage aux micro-ondes, de façon à permettre à la sauce d'être directement déversée sur les aliments.

Dans ce contexte, l'inventeur se propose de fournir une solution alternative, qui soit plus simple pour un développement industriel, et qui soit adapté à tout type de préparation alimentaire comportant d'une part des aliments et d'autre part de la sauce, qu'il est important de conserver dans des compartiments séparés, avant l'étape de consommation.

Cette solution se doit également d'être simple pour le consommateur et de présenter une très grande fiabilité. Elle doit lui permettre de mélanger la sauce et les aliments sans mettre en oeuvre une manipulation compliquée.

Dans ce contexte, l'invention concerne un nouveau produit alimentaire sous la forme d'une préparation alimentaire comportant des aliments et une sauce, destinés à être mélangés pour la consommation de la préparation alimentaire, dans un emballage fermé constitué d'un réceptacle dans lequel les aliments sont disposés et d'un couvercle dans lequel la sauce est disposée, la sauce étant séparée des aliments par un opercule venant fermer la partie du couvercle faisant face aux aliments caractérisé en ce que le réceptacle comprend des moyens de déchirement du film lors d'un déplacement relatif du couvercle par rapport au réceptacle entre une position d'attente de l'ouverture de l'opercule et une position de déchirement de l'opercule.

La sauce repose sur l'opercule et le déchirement de l'opercule par les moyens de déchirement entraine le déversement de la sauce sur les aliments. En position d'attente de l'ouverture de l'opercule, les moyens de déchirement sont écartés de l'opercule. Lorsque le couvercle est déplacé relativement par rapport au réceptacle, notamment par un déplacement en rotation, les moyens de déchirement se rapprochent de l'opercule et assurent le déchirement de ce dernier.

Dans le cadre de l'invention, le couvercle dans lequel est positionnée la sauce s'ouvre par déchirement de l'opercule, suite à un déplacement relatif du couvercle par rapport au réceptacle réalisé par le consommateur. Ainsi, la sauce est déversée sur les aliments, sans qu'il soit nécessaire d'ôter le couvercle de dessus le réceptacle, ce qui constitue un avantage important pour le consommateur :
- il n'y a pas de manipulation par le consommateur, ce qui élimine les risques de contamination,
- lorsque la préparation alimentaire doit être chauffée, il n'y a plus de risque de se brûler en manipulant une barquette de sauce brûlante,
- les aliments et la sauce étant séparés, lors du conditionnement, il n'y a pas de phénomène d'absorption comme dans le cas où ils sont conditionnés en mélange. Il est ainsi possible de réduire la quantité de sauce nécessaire, ce qui est particulièrement avantageux, sur le plan économique.

Selon un mode de réalisation particulier, le couvercle est maintenu sur le réceptacle par un opercule d'inviolabilité assurant une fermeture hermétique de l'emballage. Cet opercule d'inviolabilité sera enlevé par le consommateur, avant déplacement relatif du couvercle vers une position de déchirement de l'opercule.

Selon un autre mode de réalisation pouvant être combiné aux précédents, le réceptacle comporte des moyens de guidage en rotation du couvercle. Comme illustré dans les exemples de mise en oeuvre qui vont suivre, ces moyens de guidage en rotation du couvercle peuvent comporter un plan d'appui pour le couvercle, s'étendant sensiblement perpendiculairement à l'axe de rotation du couvercle, l'opercule s'étendant dans un plan incliné par rapport au plan d'appui, de manière à venir en appui sur les moyens de déchirement lors de la rotation du couvercle. De manière avantageuse, en position de déchirement de l'opercule, l'opercule se trouve dans une position inclinée vers le fond du réceptacle, facilitant ainsi le déversement de la sauce dans le réceptacle.

Selon un mode de réalisation particulier, le plan d'appui est défini par un rebord d'appui aménagé à la périphérie du réceptacle sur lequel vient reposer un épaulement d'appui du couvercle. De manière avantageuse, le rebord d'appui est prolongé par un retour définissant un logement d'engagement pour l'épaulement d'appui, de manière à ce que ce dernier soit sensiblement coplanaire avec le retour. Ainsi, le retour et le rebord d'appui peuvent constituer ensemble une surface de scellage pour un opercule d'inviolabilité.

Selon un autre mode de réalisation pouvant être combiné aux précédents, les moyens de déchirement sont constitués d'un organe de découpe.

Selon un autre mode de réalisation pouvant être combiné aux précédents, la préparation alimentaire est stérilisée ou pasteurisée.

Selon un autre mode de réalisation pouvant être combiné aux précédents, la préparation alimentaire est destinée à subir une opération de chauffage aux micro-ondes et, par conséquent, le réceptacle est en une matière perméable aux micro-ondes.

L'invention va maintenant faire l'objet d'une description plus détaillée, en référence à l'exemple qui illustre une forme de mise en oeuvre de l'invention.
La **Figure 1** représente une vue schématique en coupe d'un exemple de réalisation d'un produit alimentaire conforme à l'invention, en position d'attente de l'ouverture de l'opercule.
La **Figure 2** représente une vue schématique en coupe de l'exemple de réalisation de la **Figure 1****,** dans une position de déchirement de l'opercule.
La **Figure 3** correspond à l'agrandissement de la partie **B** montrée sur la **Figure 1****.**

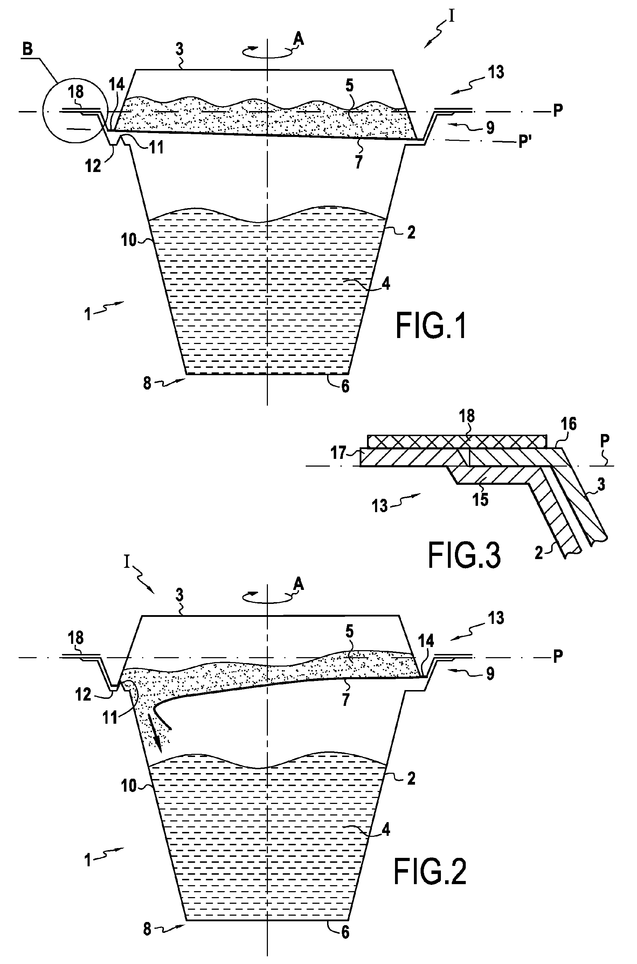

Comme présenté **Figure 1****,** le produit alimentaire **I** selon l'invention comprend un emballage **1** dans lequel une préparation alimentaire est disposée. L'emballage comporte un réceptacle **2** et un couvercle **3,** venant recouvrir le réceptacle, lorsque l'emballage est fermé.

La préparation alimentaire comprend des aliments **4** et une sauce **5.** Sur la **Figure 1****,** la sauce **5** et les aliments **4** sont conditionnés, sous forme séparée. Les aliments **4** sont logés au fond **6** du réceptacle **2,** alors que la sauce **5** est disposée dans le couvercle **3.** La sauce **5** est séparée des aliments **4** par un opercule **7** venant fermer la partie du couvercle faisant face au fond **6** du réceptacle **3** et donc aux aliments **4.** L'opercule **7** peut se présenter sous la forme d'un film, papier ou sachet, scellé sur le couvercle **3.** La sauce **5** repose sur l'opercule **7** par gravité. Cette position, dans laquelle l'opercule **7** est intact, est nommée position d'attente d'ouverture de l'opercule **7.** L'emballage **1** est fermé dans une telle position d'attente d'ouverture de l'opercule lors du stockage, du transport et de la conservation, notamment en frais ou en surgelé, du produit alimentaire. De façon avantageuse, comme illustré **Figure 1****,** dans une telle position, le réceptacle **2** et le couvercle **3** sont fermés ensemble, par un opercule d'inviolabilité **18** assurant une fermeture hermétique. Cet opercule d'inviolabilité sera de préférence pelable, de manière à pouvoir être facilement enlevé lorsque la préparation alimentaire doit être consommée.

Le réceptacle **2** peut se présenter sous différentes formes. Notamment, il peut correspondre aux formes décrites dans les documents FR 2860213 et WO 2007/003864. Dans le mode de réalisation présenté **Figure 1****,** le réceptacle **2** se présente sous la forme d'un réceptacle tronconique dont la surface de la base inférieure **8** est inférieure à la surface de la base supérieure **9.** La base inférieure **8** du réceptacle **2** tronconique est fermée par une plaque pleine qui constitue le fond **6** du réceptacle, sur lequel repose les aliments **4.**

Les parois **10** du réceptacle **2** peuvent être lisses. Il est également possible que les parois **10** soient munies de canaux de diffusion comme décrit dans la demande WO 2007/003864. Le fond **6,** quant à lui, peut être plat ou présenter un logement pour une réserve d'eau ou autre, ou encore un relief du type strie. Il est également possible que le réceptacle 2 présente un faux-fond sur lequel vont être positionnés les aliments **4.**

Le couvercle **3** et le réceptacle **2** sont, de préférence, en un matériau non dégradable lors du chauffage aux micro-ondes et perméable aux micro-ondes, par exemple, en un matériau thermoplastique, du type polypropylène ou polyéthylène.

Selon une caractéristique essentielle de l'invention, le réceptacle est équipé de moyens de déchirement **11** de l'opercule **7** lors d'un déplacement relatif du couvercle par rapport au réceptacle **2** jusqu'à une position de déchirement de l'opercule **7.** Ces moyens de déchirement **11** peuvent prendre des formes variées. Il peut notamment s'agir d'un organe de découpe, tel qu'un élément tranchant ou un picot en forme de pointe comme illustré **Figure 1****.** L'ouverture de l'opercule se fait donc par des moyens mécaniques. En position d'attente du déchirement de l'opercule, qui correspond notamment à la position dans laquelle le produit alimentaire **I** est stocké, les moyens de déchirement **11** sont situés à distance de l'opercule **7.** Les moyens de déchirement **11** peuvent être positionnés à l'intérieur du réceptacle **2** dans sa partie supérieure, au niveau d'un épaulement **12** aménagé au niveau de la paroi **10** interne du réceptacle **2,** de manière à être orientés vers l'opercule **7.** Par déplacement relatif du couvercle **3** par rapport au réceptacle **2,** par un mouvement en translation, ou comme dans l'exemple illustré sur les **Figures 1** et **2** par un mouvement en rotation, l'opercule **7** est amené sur les moyens de déchirement **11,** entrainant le déchirement de l'opercule **7.** Cette butée de l'opercule **7** sur les moyens de déchirement **11** provoque la déchirure de l'opercule **7** avec une totale fiabilité. La rotation s'effectue autour d'un axe **A** correspondant sensiblement à l'axe central du couvercle **3** qui coïncide avec l'axe central du réceptacle **2.**

De façon avantageuse, le réceptacle **2** comporte des moyens de guidage en rotation du couvercle. Ces moyens de guidage en rotation **13** peuvent être constitués d'un filetage, de type pas de vis, de forme hélicoïdale aménagé sur les parois du réceptacle **2** dans sa partie supérieure. Selon un mode de réalisation préféré représenté sur les **Figures 1** et **2****,** les moyens de guidage en rotation **13** du couvercle **3** comportent un plan d'appui **P** pour le couvercle **3,** s'étendant sensiblement perpendiculairement à l'axe de rotation **A** du couvercle **3,** l'opercule **7** s'étendant dans un plan incliné **P'** par rapport au plan d'appui **P,** de manière à venir en appui sur les moyens de déchirement **11** lors de la rotation du couvercle **3.** De tels moyens de guidage en rotation **13** vont permettre au couvercle **3** de se déplacer relativement par rapport au réceptacle **2,** sans déplacement relatif en translation. Le couvercle **3** présentant une épaisseur non constante, comme illustré **Figure 1****,** est positionné, en position d'attente de déchirement de l'opercule **7,** de manière à ce que sa partie correspondant à la plus faible épaisseur soit située au niveau des moyens de déchirement **11.** La partie inférieure du couvercle **3** présente une surface d'appui **14** pour l'opercule **7,** où ce dernier va pouvoir être fixé, par exemple par thermoscellage. Lorsque la préparation alimentaire est stérilisée ou pasteurisée, l'opercule **7,** ainsi que sa liaison au couvercle **3** devront résister à l'étape de stérilisation ou de pasteurisation, par exemple réalisée dans un autoclave. Cette surface d'appui **14** est donc dans le plan **P',** mais est décalée par rapport aux moyens de déchirement **11,** de sorte que lorsque par rotation du couvercle, l'opercule **7** est amené sur les moyens de déchirement **11,** le contact se fait après la surface d'appui **14,** de manière à permettre le déchirement de l'opercule **7** dans la partie où repose la sauce **5.** En position d'attente d'ouverture de l'opercule **7** présentée **Figure 1****,** la position de l'opercule **7** au niveau des moyens de déchirement **11** est plus éloignée du fond **6** du réceptacle **2** qu'au niveau de la zone opposée aux moyens de déchirement **11.** Etant donné que l'opercule s'étend dans un plan incliné, la rotation du couvercle permet de rapprocher l'opercule **7** des moyens de déchirement **11** jusqu'à ce qu'il vienne au contact avec les moyens de déchirement **11.** Sur un axe passant par les moyens de déchirement **11** en s'étendant parallèlement à l'axe de rotation A, la distance entre les moyens de déchirement **11** et l'opercule **7** diminue au fur et à mesure que le couvercle **3** est tourné relativement par rapport au réceptacle **2,** entre une position d'attente de déchirement et une position de déchirement telle que présentée sur la **Figure 2****.** De plus, lors du déchirement, l'opercule **7** se trouve dans une position inclinée vers le fond **6** du réceptacle **3,** ce qui facilite le déversement de la sauce. Il n'est pas exclus que l'opercule **7** ait également la possibilité de se décoller du couvercle **3,** comme décrit dans la demande WO 2009/136038, lors d'une étape de chauffage aux micro-ondes. Dans ce cas, les moyens de déchirement **11** pourront être utilisés pour le cas où le décollement à la chaleur n'aurait pu se produire, ou encore pour le cas où le mélange de la sauce aux aliments serait souhaité sans ou avant une opération de chauffage.

Il est possible que la rotation relative du couvercle **3** soit limitée de manière à ne pas correspondre à un tour complet : elle peut correspondre à un tiers de tour, par exemple, de sorte que l'opercule **7** reste attaché au couvercle **3** et ne tombe pas sur les aliments **4.** Ainsi, lorsque le couvercle **3** est ôté du réceptacle **2,** l'opercule **7** est également retiré. Selon une variante non représentée, il pourra être prévu que le réceptacle **2** comporte des moyens de limitation de la rotation du couvercle **3,** par exemple sous la forme d'une butée aménagée à l'intérieur du réceptacle **2,** au niveau de la trajectoire de la partie inférieure du couvercle **3.**

Dans l'exemple illustré sur les Figures et comme le montre l'agrandissement de la **Figure 3****,** le plan d'appui **P** est défini par un rebord d'appui **15** aménagé à la périphérie du réceptacle **2** sur lequel vient reposer un épaulement d'appui **16** du couvercle **3.** Le rebord d'appui **15** est prolongé par un retour **17** définissant un logement d'engagement pour l'épaulement d'appui **16,** de manière à ce que ce dernier soit sensiblement coplanaire avec le retour **17.** Dans ce cas alors, le retour **17** et le rebord d'appui **15** peuvent constituer ensemble une surface de scellage pour l'opercule d'inviolabilité **18,** comme montré **Figure 3****.** Dans l'exemple illustré, l'opercule d'inviolabilité **18** présente une forme d'anneau. Bien entendu, il est nécessaire d'ôter l'opercule d'inviolabilité **18,** avant de procéder à la rotation relative du couvercle **3,** de manière à ouvrir l'opercule **7.** La mise en oeuvre d'un opercule d'inviolabilité **18,** notamment sous la forme d'un film polymère thermoscellable, permet d'éviter la soudure directe du couvercle sur le réceptacle. En particulier, lorsque le couvercle et le réceptacle sont tous deux en polypropylène, leur soudure ensemble est possible et connue, mais ensuite ils ne peuvent plus être détachés l'un de l'autre après la soudure. Le fait que les bords du couvercle et les bords du réceptacle soient coplanaires permet de les sceller au moyen d'un opercule d'inviolabilité, se présentant notamment sous la forme d'un film pelable. Un film à base de polyester et/ou de polyamide pourra, par exemple, être utilisé. Ce film pelable peut être operculé par thermoscellage, en étant positionné à cheval sur les deux collerettes que forment le retour **17** et l'épaulement d'appui **16.** Lorsque la préparation alimentaire est stérilisée ou pasteurisée, l'opercule d'inviolabilité **18,** ainsi que sa liaison au réceptacle **2** et au couvercle **3** devront, de préférence, résister à l'étape de stérilisation ou de pasteurisation, par exemple réalisée dans un autoclave, de manière à ce que l'opercule d'inviolabilité **18** puisse être placé avent l'étape de stérilisation ou de pasteurisation.

Un produit alimentaire conforme à l'invention peut être aisément fabriqué à l'échelle industrielle. En effet, il suffit de placer la sauce dans le couvercle et les aliments dans le réceptacle. Le couvercle est operculé après remplissage avec la sauce. Le réceptacle est ensuite fermé avec le couvercle et le tout est hermétiquement scellé grâce à l'opercule d'inviolabilité. Des marques de repérage sur le couvercle et sur le réceptacle pourront être prévues, de manière que lors de la fermeture, les moyens de déchirement soient positionnés au niveau de la partie du couvercle présentant la plus faible épaisseur. Un tel opercule d'inviolabilité permet également de réaliser un traitement en autoclave, nécessaire dans les cas où la préparation alimentaire doit être stérilisée ou pasteurisée. De plus, sur le plan industriel, le couvercle et le réceptacle peuvent être fabriqués en thermoformage, et non en injection, ce qui engendre des coûts d'outillage beaucoup moins chers.

Comme dans les versions décrites dans les demandes de brevet FR 2 860 213 et WO 2007/003864, le produit alimentaire selon l'invention est prêt pour être consommé, très rapidement et aisément. Il est parfaitement adapté pour une étape de chauffage ou de cuisson aux micro-ondes. Dans ce cas, le consommateur fait chauffer le produit alimentaire qui contient la sauce dans son couvercle.

Pendant le temps de chauffage aux micro-ondes :
- Les aliments cuisent ou sont réchauffés à la vapeur,
- La sauce chauffe,
- Lorsque l'opercule d'inviolabilité est constitué d'un film pelable, operculé, celui-ci s'ouvre légèrement pour laisser échapper la vapeur générée.

A la fin du temps de chauffage aux micro-ondes, le consommateur finit d'ouvrir l'emballage, en décollant totalement l'opercule d'inviolabilité, déplace relativement le couvercle par rapport au réceptacle, de manière à déchirer mécaniquement l'opercule, la sauce tombe alors sur les aliments. Le consommateur peut alors mélanger les aliments à la sauce, par exemple en se servant de l'emballage comme « shaker », enlève le couvercle et déguste la préparation alimentaire. La solution proposée permet au consommateur d'éviter de se bruler lors du mélange de la sauce et des aliments, lorsque la préparation est prête à être consommée. Le consommateur peut tout aussi bien choisir d'ôter l'opercule d'inviolabilité, puis de déplacer relativement le couvercle par rapport au réceptacle, de manière à déchirer l'opercule, avant l'opération de chauffage.

Le réceptacle peut constituer le récipient de dégustation. La préparation alimentaire, par exemple sous la forme d'un plat de pâtes savoureux et riche en goût est obtenue, avec une manipulation simple pour ajouter la sauce aux aliments, cette opération étant effectuée par simple déplacement relatif du couvercle par rapport au réceptacle, sans ôter le couvercle de dessus le réceptacle. La préparation alimentaire est directement consommable, sans avoir à être transvasée dans un autre récipient. Un tel emballage est donc parfaitement adapté pour être utilisé dans les hôtels, brasseries, établissements de restauration rapide, les clubs de sport ou de loisir, et d'une manière générale dans tous les endroits où un service restauration peut être réalisé. Dans le cas où la préparation alimentaire est pasteurisée ou stérilisée, le produit alimentaire est parfaitement adapté à la Grande et Moyenne Distribution en tant que produit frais avec une D.L.C. de 4 à 6 semaines.

Bien entendu, la solution proposée dans le cadre de l'invention est particulièrement adaptée au cas où les aliments sont des pâtes alimentaires ou une préparation à base de pâtes, mais pourrait également convenir à d'autres aliments, notamment à base de féculents tel que le riz, mais aussi de légumes, de purée, du boulgour, du couscous. Par pâtes alimentaires, on entend les pâtes pour consommation culinaire pouvant se présenter sous différentes formes de type penne, nouilles, tagliatelles, spaghettis ou autres. Ces pâtes sont précuites et peuvent être enrobées d'un mélange eau/huile pour l'étape de pasteurisation, ou éventuellement cuites lors de l'étape de stérilisation. Les aliments peuvent également contenir des « marquants », tels que des morceaux de poisson, de viande, de fruits de mer.

Par sauce, on entend une préparation contenant une certaine quantité d'eau et de consistance liquide ou semi-liquide. Cette sauce va permettre de donner aux aliments le goût désiré. La sauce peut contenir différents éléments de type aromates, légumes, matières grasses, protéines, tels que des morceaux de poisson, de viande, de fruits de mer, en fonction du goût désiré. Dans tous les cas, la sauce contient une certaine quantité d'eau. Cette sauce peut être réalisée par l'intermédiaire de tout liquide aqueux pouvant se présenter sous différentes formes, par exemple sous forme de bouillons de volaille, vin, lait de coco...

## Revendications

1. Nouveau produit alimentaire (**I**) sous la forme d'une préparation alimentaire comportant des aliments **(4)** et une sauce **(5),** destinés à être mélangés pour la consommation de la préparation alimentaire, dans un emballage **(1)** fermé constitué d'un réceptacle **(2)** dans lequel les aliments **(4)** sont disposés et d'un couvercle **(3)** dans lequel la sauce **(5)** est disposée, la sauce étant séparée des aliments par un opercule **(7)** venant fermer la partie du couvercle **(3)** faisant face aux aliments **(4) caractérisé en ce que** le réceptacle **(2)** comprend des moyens mécaniques de dechirement **(11)** de l'opercule **(7)** lors d'un déplacement relatif du couvercle (3) par rapport au réceptacle **(2),** entre une position d'attente de l'ouverture de l'opercule **(7)** et une position de déchirement de l'opercule **(7)**, l'emballage étant fermé dans la position d'attente de l'ouverture de l'opercule.

2. Nouveau produit alimentaire **(I)** selon la revendication 1, **caractérisé en ce que** la sauce **(5)** repose sur l'opercule **(7)** et le déchirement de l'opercule **(7)** par les moyens de déchirement **(11)** entrainent le déversement de la sauce **(5)** sur les aliments **(4).**

3. Nouveau produit alimentaire **(I)** selon la revendication 1 ou 2, **caractérisé en ce que** le couvercle **(3)** est maintenu sur le réceptacle **(2)** par un opercule d'inviolabilité **(18)** assurant une fermeture hermétique de l'emballage **(1).**

4. Nouveau produit alimentaire **(I)** selon l'une des revendications précédentes, **caractérisé en ce qu'**en position d'attente de l'ouverture de l'opercule **(7),** les moyens de déchirement **(11)** sont écartés de l'opercule **(7).**

5. Nouveau produit alimentaire **(I)** selon l'une des revendications précédentes, **caractérisé en ce que** le réceptacle **(2)** comporte des moyens de guidage en rotation **(13)** du couvercle **(3).**

6. Nouveau produit alimentaire **(I)** selon la revendication 5, **caractérisé en ce que** les moyens de guidage en rotation **(13)** du couvercle **(3)** comportent un plan d'appui **(P)** pour le couvercle **(3),** s'étendant sensiblement perpendiculairement à l'axe de rotation (A) du couvercle (3), l'opercule **(7)** s'étendant dans un plan incliné **(P')** par rapport au plan d'appui **(P),** de manière à venir en appui sur les moyens de déchirement **(11)** lors de la rotation du couvercle **(3).**

7. Nouveau produit alimentaire **(I)** selon la revendication 6, **caractérisé en ce que** le plan d'appui **(P)** est défini par un rebord d'appui **(15)** aménagé à la périphérie du réceptacle **(2)** sur lequel vient reposer un épaulement d'appui **(16)** du couvercle **(3).**

8. Nouveau produit alimentaire **(I)** selon la revendication 7, **caractérisé en ce que** le rebord d'appui **(15)** est prolongé par un retour **(17)** définissant un logement d'engagement pour l'épaulement d'appui **(16),** de manière à ce que ce dernier soit sensiblement coplanaire avec le retour **(17).**

9. Nouveau produit alimentaire **(I)** selon les revendications 3 et 8, **caractérisé en ce que** le retour **(17)** et le rebord d'appui **(15)** constituent ensemble une surface de scellage pour l'opercule d'inviolabilité **(18).**

10. Nouveau produit alimentaire **(I)** selon l'une des revendications précédentes, **caractérisé en ce que** les moyens de déchirement **(11)** sont constitués d'un organe de découpe.

11. Nouveau produit alimentaire **(I)** selon l'une des revendications précédentes, **caractérisé en ce que** la préparation alimentaire est stérilisée ou pasteurisée.

12. Nouveau produit alimentaire (**I**) selon l'une des revendications précédentes, **caractérisé en ce que** la préparation alimentaire est destinée à subir une opération de chauffage aux micro-ondes et **en ce que** le réceptacle **(2)** est en un matériau perméable aux micro-ondes.

## Patentansprüche

1. Neuartiges Lebensmittelprodukt (I) in Form einer Lebensmittelzubereitung, die Lebensmittel (4) und eine Soße (5) umfasst, die dazu bestimmt sind, für den Verzehr der Lebensmittelzubereitung in einer geschlossenen Verpackung (1) vermischt zu werden, die aus einem Behälter (2) gebildet wird, in dem die Lebensmittel (4) angeordnet sind, und aus einem Deckel (3), in dem die Soße (5) angeordnet ist, wobei die Soße durch ein Verschlussorgan (7) von den Lebensmitteln getrennt ist, das jenen Abschnitt des Deckels (3) verschließt, der sich gegenüber den Lebensmitteln (4) befindet, **dadurch gekennzeichnet, dass** der Behälter (2) mechanische Mittel zum Aufreißen (11) des Verschlussorgans (7) bei einer relativen Bewegung des Deckels (3) im Verhältnis zum Behälter (2) zwischen einer Bereitschaftsposition zum Öffnen des Verschlussorgans (7) und einer Aufreißposition des Verschlussorgans (7) umfasst, wobei die Verpackung in der Bereitschaftsposition zum Öffnen des Verschlussorgans geschlossen ist.

2. Neuartiges Lebensmittelprodukt (I) nach Anspruch 1, **dadurch gekennzeichnet, dass** die Soße (5) auf dem Verschlussorgan (7) aufliegt, und das Aufreißen des Verschlussorgans (7) durch die Mittel zum Aufreißen (11) dafür sorgt, dass sich die Soße (5) über die Lebensmittel (4) ergießt.

3. Neuartiges Lebensmittelprodukt (I) nach Anspruch 1 oder 2, **dadurch gekennzeichnet, dass** der Deckel (3) durch einen Sicherheitsverschluss (18) auf dem Behälter (2) gehalten wird, welcher für den hermetischen Verschluss der Verpackung (1) sorgt.

4. Neuartiges Lebensmittelprodukt (I) nach einem der vorherigen Ansprüche, **dadurch gekennzeichnet, dass** die Mittel zum Aufreißen (11) in der Bereitschaftsposition zum Öffnen des Verschlussorgans (7) vom Verschlussorgan (7) abgehoben sind.

5. Neuartiges Lebensmittelprodukt (I) nach einem der vorherigen Ansprüche, **dadurch gekennzeichnet, dass** der Behälter (2) Mittel zur Drehführung (13) des Deckels (3) umfasst.

6. Neuartiges Lebensmittelprodukt (I) nach Anspruch 5, **dadurch gekennzeichnet, dass** die Mittel zur Drehführung (13) des Deckels (3) eine Auflageebene (P) für den Deckel (3) umfassen, die sich in etwa senkrecht zur Drehachse (A) des Deckels (3) erstreckt, wobei sich das Verschlussorgan (7) über eine im Verhältnis zur Auflageebene (P) geneigte Ebene (P') erstreckt, um sich beim Drehen des Deckels (3) an den Mitteln zum Aufreißen (11) anzulegen.

7. Neuartiges Lebensmittelprodukt (I) nach Anspruch 6, **dadurch gekennzeichnet, dass** die Auflageebene (P) durch einen Auflagerand (15) definiert wird, der am Umfang des Behälters (2) angeordnet ist, an dem sich ein Auflageansatz (16) des Deckels (3) anlegt.

8. Neuartiges Lebensmittelprodukt (I) nach Anspruch 7, **dadurch gekennzeichnet, dass** sich der Auflagerand (15) in einer Rückführung (17) fortsetzt, die eine Einführungsaufnahme für den Auflageansatz (16) definiert, sodass Letzterer in etwa komplanar mit der Rückführung (17) steht.

9. Neuartiges Lebensmittelprodukt (I) nach den Ansprüchen 3 und 8, **dadurch gekennzeichnet, dass** die Rückführung (17) und der Auflagerand (15) gemeinsam eine Versiegelungsfläche für den Sicherheitsverschluss (18) bilden.

10. Neuartiges Lebensmittelprodukt (I) nach einem der vorherigen Ansprüche, **dadurch gekennzeichnet, dass** die Mittel zum Aufreißen (11) durch ein Ausschneideorgan gebildet werden.

11. Neuartiges Lebensmittelprodukt (I) nach einem der vorherigen Ansprüche, **dadurch gekennzeichnet, dass** die Lebensmittelzubereitung sterilisiert oder pasteurisiert ist.

12. Neuartiges Lebensmittelprodukt (I) nach einem der vorherigen Ansprüche, **dadurch gekennzeichnet, dass** die Lebensmittelzubereitung dazu bestimmt ist, einen Aufwärmvorgang mit Mikrowellen zu durchlaufen und dadurch, dass der Behälter (2) aus einem mikrowellendurchlässigen Material gefertigt ist.

## Claims

1. Novel food product (I) in the form of a food preparation comprising food component (4) and a sauce (5), intended to be blended for the consumption of the food preparation, in a closed packaging (1) made up of a container (2) wherein food component (4) are placed and a lid (3) wherein the sauce (5) is placed, the sauce (5) being selectively separated from the food component (4) by a seal (7) closing off the part of the lid (3) facing the food component (4), **characterized in that** the container (2) comprises mechanic means of tearing (11) of the seal (7) during a relative motion of the lid (3) with respect to the container (2), between a waiting position of the opening of the seal (7) and a tearing position of the seal (7), the container being closed in the waiting position of the opening of the seal (7).

2. Novel food product (I) according to claim 1, **characterized in that** the sauce (5) rests on the seal (7) and the tearing of the seal (7) by the mechanic means of tearing (11) led to the spillage of the sauce (5) onto the food component (4).

3. Novel food product (I) according to claim 1 or 2, **characterized in that** the lid (3) is maintained on the container (2) by a tamper-proof seal (18) for providing a hermetic seal of the closed packaging (1).

4. Novel food product (I) according to one of the previous claims, **characterized in that** in the waiting position of the opening of the seal (7), the mechanic means of tearing (11) are spaced away from the seal (7).

5. Novel food product (I) according to one of the previous claims, **characterized in that** the container (2) comprises guide means in rotation (13) of the lid (3).

6. Novel food product (I) according to claim 5, **characterized in that** the guide means in rotation (13) of the lid (3) comprise a bearing plane (P) for the lid (3), extending substantially perpendicularly to an axis of rotation (A) of the lid (3), the seal (7) extending in a plane skewed (P') with respect to the bearing plane (P), for bearing on the mechanic means of tearing (11) during the rotation of the lid (3).

7. Novel food product (I) according to claim 6, **characterized in that** the bearing plane (P) is defined by a support rim (15) located to the periphery of the container (2) on which bears a support shoulder (16) of the lid (3).

8. Novel food product (I) according to claim 7, **characterized in that** the support rim (15) is extended by a return portion (17) defining a housing to cooperate with the support shoulder (16), in a way that the latter is substantially coplanar with the return portion (17).

9. Novel food product (I) according to claims 3 and 8, **characterized in that** the return portion (17) and the support rim (15) together constitute a sealing surface for the tamper-proof seal (18).

10. Novel food product (I) according to one of the previous claims, **characterized in that** the mechanic means of tearing (11) comprise a mechanical cutting element.

11. Novel food product (I) according to one of the previous claims, **characterized in that** the food preparation is sterilized or pasteurized.

12. Novel food product (I) according to one of the previous claims, **characterized in that** the food preparation is destined for undergoing a heating operation by microwave energy and that the container (2) is transparent to the microwave energy.
